# EUROPÄISCHE PATENTSCHRIFT

(11) **EP 2 107 980 B1**
(45) Veröffentlichungstag und Bekanntmachung des Hinweises auf die Patenterteilung: **20.08.2014**
(21) Anmeldenummer: 07847630.6
(22) Anmeldetag: 03.12.2007
(51) Int. Cl.: B60S 1/38

(54) **WISCHBLATT**
WIPER BLADE
BALAI D'ESSUIE-GLACE

(30) Priorität: 28.12.2006 DE 102006061680
(43) Veröffentlichungstag der Anmeldung: 14.10.2009
(73) Patentinhaber: Robert Bosch GmbH, 70442 Stuttgart (DE)
(72) Erfinder: WILMS, Christian, B-3582 Koersel-beringen (BE); LAMMENS, Koen, B-3001 Haverlee (BE); VERELST, Hubert, B-3300 Tienen (BE)
(86) Internationale Anmeldenummer: PCT/EP2007/063117
(87) Internationale Veröffentlichungsnummer: WO 2008/080720

(56) Entgegenhaltungen:
- WO-A-2005/092680
- WO-A-2005/115813

## Beschreibung

### Stand der Technik

Die Erfindung geht von einem Wischblatt nach dem Oberbegriff des Anspruchs 1 aus.

Aus der DE 10 2004 051 467 A1 ist ein Wischblatt bekannt. Zwei als Tragelement dienende Federschienen sind in inneren Führungsprofilen der Endkappen geführt, die an der zum Ende des Wischblatts weisenden Stirnseite geschlossen sind, sodass die Federschienen durch die geschlossenen Stirnflächen in Längsrichtung relativ zu den Endkappen fixiert sind. Die Endkappen sind ihrerseits in Längsrichtung durch lösbare Haltemittel zur Kopfleiste der Wischleiste fixiert. Somit sind auch die Federschienen über die Endkappen relativ zur Wischleiste fixiert. Bei einem Ausführungsbeispiel dient als Haltemittel zwischen der Endkappe und der Kopfleiste eine Nadel oder ein Dorn, der an der einer Wischleiste zugewandten Seite eines Deckels angeformt ist und bei der Montage in die Kopfleiste der Wischleiste eindringt, sobald der Deckel geschlossen wird. Der Deckel verrastet in der geschlossenen Position mit der Endkappe. Zur leichteren Betätigung des Deckels kann dieser an seiner Außenseite Griffrillen besitzen. Es sind auch Wischblätter bekannt, die als Tragelement eine Federschiene besitzen, die in einem Längskanal der Wischleiste untergebracht ist.

Weiterer Stand der Technik ist aus der WO 2005/115813 A bekannt. Aus der WO-2005/092680A ist ein gattungsgemässes Wischblatt bekannt.

### Offenbarung der Erfindung

Nach der Erfindung ist die Spitze des Dorns sowohl im geöffneten Zustand des Deckels als auch im geschlossenen Zustand durch Teile der Endkappe bzw. des Deckels gegen Berührung gesichert. Hierzu sind zweckmäßigerweise an der Endkappe im Bereich des Dorns in Längs- und Vertikalrichtung des Wischblatts verlaufende Schürzen angeformt, die den Dorn seitlich überdecken und bei geschlossenem Deckel parallel zur Kopfleiste verlaufen. Die Schürzen verhindern, dass man unbeabsichtigt mit der Spitze des Dorns in Berührung kommt und sich verletzt. Die Verletzungsgefahr besteht ohne die Schürzen insbesondere dann, wenn noch keine Wischleiste montiert ist und der Deckel geschlossen wird, wobei ein Finger unbeabsichtigt in den Bereich des Dorns gelangt. Um die Wischleiste und gegebenenfalls das Tragelement, das aus einer Federschiene oder aus mehreren Federschienen bestehen kann, wechseln zu können, reicht es in der Regel aus, wenn nur eine Endkappe je Wischblatt in der erfindungsgemäßen Weise ausgeführt ist. Die Wischleiste und das Tragelement können dann in Längsrichtung des Wischblatts nach Entfernen dieser Endkappe demontiert werden.

Damit die Schürzen nicht zu lang zu sein brauchen, ist es zweckmäßig, dass der Abstand zwischen den Schürzen möglichst klein gewählt wird, sodass sie mit geringem Spiel zur Kopfleiste verlaufen. Sie werden dabei in vorteilhafter Weise an den Unterseiten von Führungen angeordnet, in denen die als Tragelement dienenden Federschienen geführt sind. Da die Schürzen dicht an der Kopfleiste verlaufen, wird ein Kontakt zwischen ihnen und einer Fahrzeugscheibe beim Wischen vermieden. Wegen des kleinen Zwischenraums zwischen den Schürzen erreicht man trotz einer relativ geringen Erstreckung in Richtung des Dorns einen guten Schutz gegen Verletzungen. So reicht es in vorteilhafter Weise aus, dass die Schürzen bis in den Bereich von seitlichen Stützleisten der Wischleiste reichen.

Um auch Verletzungen bei geöffnetem Deckel auszuschließen, ist es zweckmäßig, dass der Deckel nicht lösbar mit der Endkappe verbunden ist und der Dorn an der Innenseite einer Deckwand des Deckels in einer Aussparung angebracht ist. Ferner ist es günstig, dass der Schwenkwinkel des Deckels so begrenzt ist, dass die Spitze des Dorns in geöffneter Stellung des Deckels von Teilen der Endkappe abgedeckt ist.

### Kurze Beschreibung der Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

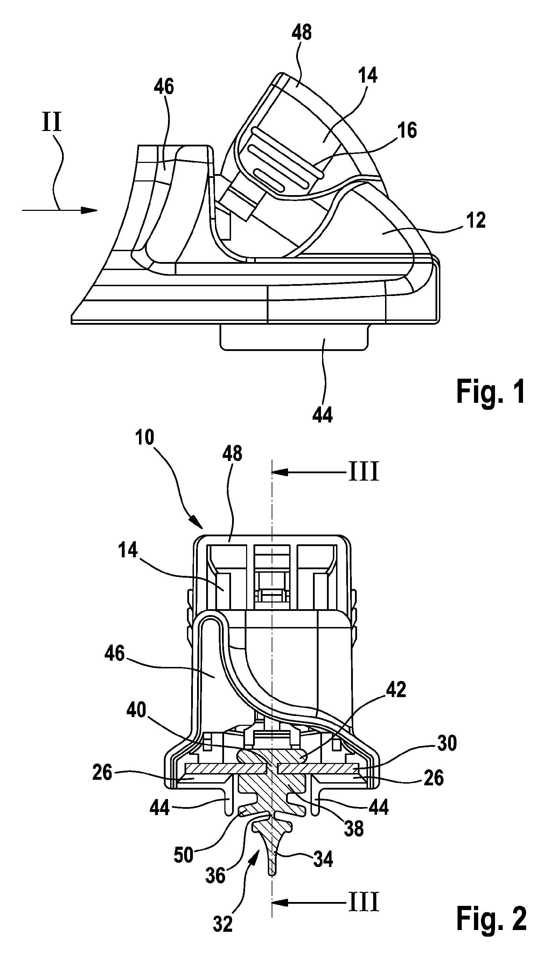

- Fig. 1: eine Seitenansicht einer Endkappe mit offener Klappe,
- Fig. 2: einen Querschnitt durch ein erfindungsgemäßes Wischblatt, gesehen in Richtung eines Pfeils II in Fig. 1,

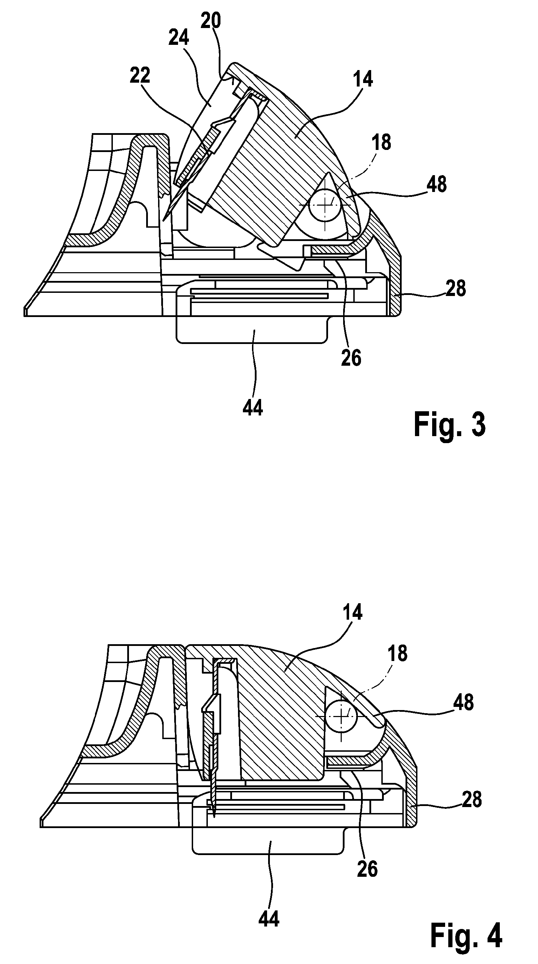

- Fig. 3: einen Schnitt entsprechend der Linie III-III in Fig. 2, jedoch ohne Wischleiste und Federschienen und
- Fig. 4: einen Schnitt entsprechend Fig. 3, jedoch mit geschlossener Klappe.

### Ausführungsformen der Erfindung

Ein Wischblatt 10 besitzt eine Wischleiste 32, deren Wischlippe 34 über einen Kippsteg 36 mit einer Kopfleiste 38 verbunden ist. Zwischen der Kopfleiste 38 und dem Kippsteg 36 befinden sich seitliche Stützleisten 50, an denen sich die Wischlippe 34 beim Umlegen in den Endlagen der Wischbewegung abstützen kann.

An den Längsseiten der Kopfleiste 38 sind Längsnuten vorgesehen, die zwischen sich einen Steg 40 bilden. Dieser verbindet eine Rückenleiste 42 mit dem übrigen Teil der Kopfleiste 38. In die seitlichen Längsnuten sind als Tragelement Federschienen 30 eingesetzt, die ein Stück weit seitlich aus den Längsnuten vorstehen. Auf den vorstehenden Teilen der Federschienen 30 kann ein nicht dargestelltes Anschlusselement zum gelenkigen Verbinden mit einem Wischarm, ein Spoiler und Endkappen 12 montiert werden. Für einen Spoiler besitzen die Endkappen 12 Anschlussprofile 46.

Die Endkappen 12 sitzen mit Führungen 26 auf den Federschienen 30 und halten diese zusammen. Da die zu den Enden des Wischblatts 10 weisenden Stirnseiten 28 der Endkappen 12 geschlossen sind und über den Bereich der Federschienen 30 reichen, fixieren die Endkappen 12 die Federschienen 30 in Längsrichtung des Wischblatts 10, sofern sie selbst in Längsrichtung fixiert sind. Hierzu dienen Haltemittel in Form eines Dorns 22, der an einer Innenseite 20 einer Deckwand 48 in einer Aussparung 24 eines Deckels 14 angeordnet ist. Der Deckel 14 ist um eine quer zur Längsrichtung des Wischblatts 10 verlaufende Gelenkachse 18 schwenkbar mit der Endkappe verbunden, wobei sich seine Außenkontur im geschlossenen Zustand des Deckels 14 harmonisch an die Außenkontur der Endkappe 12 anschließt. Zur leichteren Betätigung des Deckels sind an seiner Außenseite Griffleisten 16 vorgesehen.

Wird der Deckel 14 bei der Montage der Endkappe 12 geschlossen, dringt die Spitze des Dorns 22 in die Rückenleiste 42 der Kopfleiste 38 ein und fixiert die Endkappe 12 gegenüber der Wischleiste 32, sodass nunmehr auch die Federschienen 30 zwischen den Endkappen 12 in Längsrichtung des Wischblatts 10 gesichert sind. Zum Wechseln der Wischleiste 32 reicht es aus, wenn nur eine Endkappe 12 einen Deckel 14 mit einem Dorn 22 aufweist. Die andere Endkappe 12 kann beliebig in Längsrichtung fixiert werden, z.B. einstückig mit einem Spoilerteil verbunden sein.

Zum Schutz vor Verletzungen besitzt die Endkappe 12 bei geschlossenem Deckel 14 im Bereich des Dorns 22 Schürzen 44, die sich parallel zur Wischleiste 32 erstrecken und bis in den Bereich der seitlichen Stützleisten 50 reichen. Die Schürzen 44 werden erfindungsgemäss an den unteren Seiten der Führungen 26 angeformt und verlaufen mit geringem Spiel zur Kopfleiste 38. Dadurch wird erreicht, dass es kaum möglich ist, durch den schmalen Zwischenraum mit der Spitze des Dorns 22 in Kontakt zu kommen, auch wenn die Wischleiste 32 noch nicht montiert ist. Ferner wird vermieden, dass die Schürzen 44 bei einer Wischbewegung des Wischblatts 10 über eine Fahrzeugscheibe diese berühren.

## Patentansprüche

1. Wischblatt (10) mit einer Wischleiste (32) und einem Tragelement (30), auf dessen Enden Endkappen (12) geführt sind, die an ihren zu den Enden des Wischblatts (10) weisenden Stirnseiten (28) zu einer Wischlippe (34) hin über das Tragelement (30) reichen, wobei mindestens eine Endkappe (12) einen Deckel (14) aufweist, der um eine Gelenkachse (18) quer zum Wischblatt (10) schwenkbar mit der Endkappe (12) verbunden ist und an seiner der Kopfleiste (38) zugewandten Seite einen Dorn (22) besitzt, der bei geschlossenem Deckel (14) in die Kopfleiste (38) eindringt, wobei die Spitze des Dorns (22) sowohl im geöffneten Zustand des Deckels (14) als auch im geschlossenen Zustand durch Teile der Endkappe (12) bzw. des Deckels (14) gegen Berührung gesichert ist, **dadurch gekennzeichnet, dass** an der Endkappe (12) im Bereich des Dorns (22) in Längs- und Vertikalrichtung verlaufende Schürzen (44) angeformt sind, die den Dorn (22) bei geschlossenem Deckel seitlich überdecken und (14) bei montierter Wischleiste (32) parallel zur Kopfleiste (38) verlaufen, wobei die Schürzen (44) an den Unterseiten von Führungen (26) angeordnet sind, in denen das Tragelement (30) geführt ist, und mit geringem Spiel zur Kopfleiste (38) verlaufen und bis in den Bereich von seitlichen Stützleisten (50) der Wischleiste (32) reichen.

2. Wischblatt (10) nach einem der vorhergehenden Ansprüche, **dadurch gekennzeichnet, dass** der Dorn (22) an der Innenseite (20) einer Deckwand (48) des Deckels (14) in einer Aussparung (24) angebracht ist.

3. Wischblatt (10) nach einem der vorhergehenden Ansprüche, **dadurch gekennzeichnet, dass** der Schwenkwinkel des Deckels (14) so begrenzt ist, dass die Spitze des Dorns (22) in geöffneter Stellung des Deckels (14) von Teilen der Endkappe (12) abgedeckt ist.

## Claims

1. Wiper blade (10) with a wiper strip (32) and a support element (30), at the ends of which end caps (12) are guided, said end caps, at their end sides (28) facing the ends of the wiper blade (10), extending over the support element (30) as far as a wiper lip (34), wherein at least one end cap (12) has a lid (14) which is connected to the end cap (12) so as to be capable of pivoting about an articulation axis (18) transversely with respect to the wiper blade (10) and has a gudgeon (22) on its side facing the head strip (38), which gudgeon penetrates the head strip (38) when the lid (14) is closed, wherein the tip of the gudgeon (22) is protected by parts of the end cap (12) or of the lid (14) against contact both in the open state of the lid (14) and in the closed state, **characterized in that** skirts (44) running in the longitudinal and vertical direction are integrally formed on the end cap (12) in the region of the gudgeon (22), said skirts laterally overlapping the gudgeon (22) when the lid (14) is closed, and running parallel to the head strip (38) when the wiper strip (32) is fitted, wherein the skirts (44) are arranged on the lower sides of guides (26), in which the support element (30) is guided, and run with little clearance with respect to the head strip (38) and extend into the region of lateral support strips (50) of the wiper strip (32).

2. Wiper blade (10) according to Claim 1, **characterized in that** the gudgeon (22) is fitted in a cutout (24) on the inner side (20) of a top wall (48) of the lid (14).

3. Wiper blade (10) according to one of the preceding claims, **characterized in that** the pivoting angle of the lid (14) is restricted in such a manner that, in the open position of the lid (14), the tip of the gudgeon (22) is covered by parts of the end cap (12).

## Revendications

1. Balai d'essuie-glace (10) comprenant une raclette de balai d'essuie-glace (32) et un élément de support (30) sur les extrémités duquel sont guidés des capuchons d'extrémité (12) qui, au niveau de leurs côtés frontaux (28) orientés vers les extrémités du balai d'essuie-glace (10), s'étendent au-delà de l'élément de support (30) en direction d'une lèvre de balai d'essuie-glace (34), au moins un capuchon d'extrémité (12) comprenant un couvercle (14) qui est relié au capuchon d'extrémité (12) de manière à pouvoir pivoter autour d'un axe d'articulation (18) transversalement au balai d'essuie-glace (10) et présente, sur son côté tourné vers la baguette de tête (38), une broche (22) qui pénètre dans la baguette de tête (38) lorsque le couvercle (14) est fermé, la pointe de la broche (22) étant protégée contre un contact par des parties du capuchon d'extrémité (12) ou du couvercle (14) non seulement à l'état ouvert du couvercle (14) mais aussi à l'état fermé, **caractérisé en ce que** des jupes (44) s'étendant dans les directions longitudinale et verticale sont formées sur le capuchon d'extrémité (12) dans la région de la broche (22), lesquelles jupes recouvrent latéralement la broche (22) lorsque le couvercle (14) est fermé et s'étendent parallèlement à la baguette de tête (38) lorsque la raclette de balai d'essuie-glace (32) est montée, les jupes (44) étant disposées sur les côtés inférieurs de guides (26) dans lesquels l'élément de support (30) est guidé, et s'étendant avec un faible jeu par rapport à la baguette de tête (38) et s'étendant jusque dans la région de baguettes d'appui (50) latérales de la raclette de balai d'essuie-glace (32).

2. Balai d'essuie-glace (10) selon la revendication 1, **caractérisé en ce que** la broche (22) est installée dans un évidement (24) sur le côté intérieur (20) d'une paroi supérieure (48) du couvercle (14).

3. Balai d'essuie-glace (10) selon l'une quelconque des revendications précédentes, **caractérisé en ce que** l'angle de pivotement du couvercle (14) est limité de telle sorte que la pointe de la broche (22) soit recouverte par des parties du capuchon d'extrémité (12) dans la position ouverte du couvercle (14).
